(19)

**Europäisches Patentamt**
**European Patent Office**
**Office européen des brevets**

(11) **EP 1 973 253 A1**

(12) **EUROPEAN PATENT APPLICATION**

(43) Date of publication:
**24.09.2008 Bulletin 2008/39**

(51) Int Cl.:
**H04L 1/00** (2006.01)

(21) Application number: **07005812.8**

(22) Date of filing: **21.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nokia Siemens Networks GmbH & Co. KG**
**81541 München (DE)**

(72) Inventors:
• **Bublin, Mugdim**
  **1150 Wien (AT)**
• **Slanina, Peter**
  **3441 Judenau (AT)**

(54) **A method and a system for adaptation of a modulation and coding scheme**

(57)     The invention relates to a method for adaptation of a modulation and coding scheme (MCS) for data transmission of service data via a data channel of a wireless link comprising the steps of measuring (S1) a channel variability of the data channel and/or an interference variability, providing (S2) a service specific channel quality-margin (cqm) depending on the measured channel variability and/or the measured interference variability, and selecting (S3) a modulation and coding scheme (MCS) in response to the provided channel quality-margin (cqm) and an actual channel quality of the data channel.

# FIG 3

```
        Start
          |
          v
    measuring        S1
       cqp
          |
          v
    providing        S2
       cqm
          |
          v
    selecting        S3
       MCS
          |
          v
        Stop
```

EP 1 973 253 A1

**Description**

The invention relates to a method and a system for adaptation of a modulation and coding scheme (MCS) for transmission of service data via a data channel of a wireless link.

A link adaptation is performed in wireless data transmission systems to match changing modulation, coding and protocol parameters of a radio link. During link adaptation, a modulation and coding scheme MCS can be adapted according to the quality of the radio channel.

The modulation and coding scheme is used in EDGE and EGPRS-systems. The modulation and coding scheme MCS determines how many data bits are transmitted per second in each time slot. A conventional modulation and coding scheme MCS comprises different MCS variants. Which MCS variant is chosen depends on the quality of the radio link. The MCS schemes MCS1-MCS8 provide different data transmission rates. When the quality of the radio link is diminished, a base station BS can switch to a lower MCS-variant. To enable a high data throughput, the modulation and coding scheme MCS is dynamically selected during link adaptation according to channel conditions and occurring signal interference.

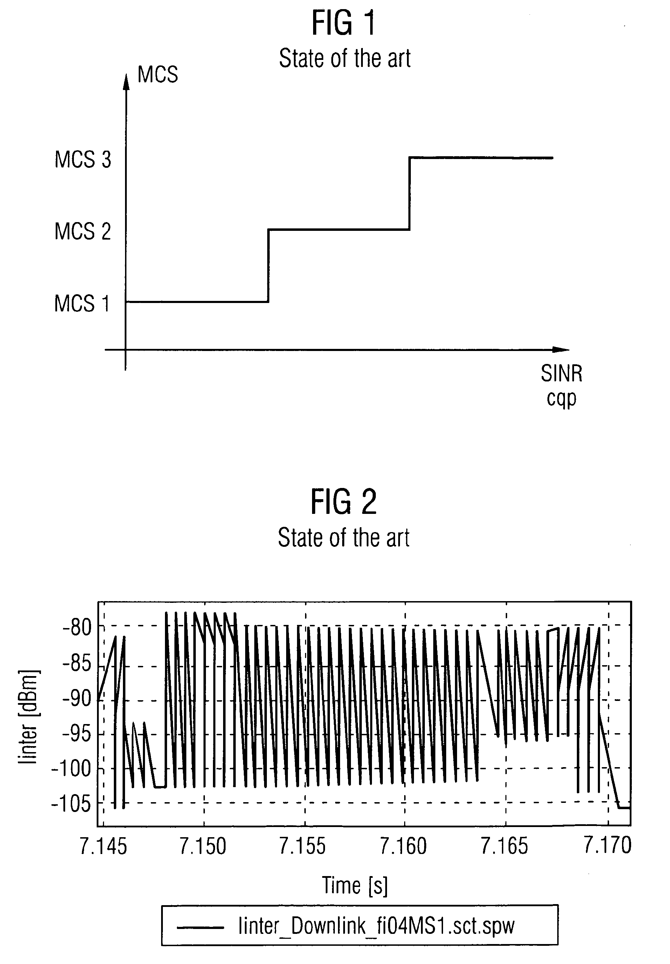

Figure 1 shows a diagram to illustrate a conventional modulation and coding scheme adaptation system. Different MCS-variants, such as MCS1, MCS2, MCS3 are chosen depending on a channel quality parameter cqp, such as the signal to interference noise ration SINR. For higher signal to interference to noise ratios SINR, i. e. better data transmission channels, a higher MCS-variant is selected. A higher MCS-variant has a lower redundancy and provides a higher data transmission rate. For example, the MCS-variant MCS8 comprises the highest data transmission rate of 54,4 KB/sec for each data transmission channel. For eight data transmission channels, this gives a data transmission rate of about 430 KB/sec.

In a conventional data transmission channel signal interference varies very much with time so that a selected modulation coding scheme MCS which is optimal at one time point, is not optimal at another time. Figure 2 shows a typical interference variation within a downlink DL, i. e. an intercell interference per received downlink DL burst. In a conventional system to cope with an interference variation it is tried to predict channel conditions in the future according to past values using, for example Kalman filters. However, a Kalman filter implementation is relative complex. Furthermore, Kalmann filters consume power which is critical, for instance, for mobile devices.

In an uplink UL from a mobile station MS to a base station BS the interference prediction is even more difficult than in a downlink DL from a base station BS to a mobile station MS. In an uplink UL, the positions and number of interferer can change significantly due to scheduling in neighboring cells. Other than in a downlink DL, where a number of interfering base stations BS and their position cannot change due to scheduling the rescheduling causes in an uplink UL uncorrelated changes of the interference. Consequently, the prediction capability is very limited in an uplink UL.

Accordingly, it is an object of the present invention to provide a method and a system for adaptation of a modulation and coding scheme which is robust against changes of the condition of a data transmission channel.

This object is achieved by a method comprising the features of claim 1.

The invention provides a method for adaptation of a modulation and coding scheme for data transmission of service data via a data channel of a wireless link comprising the steps of

- measuring a channel variability of the data channel and/or an interference variability,

- providing a channel quality-margin depending on the measured channel variability and/or the measured interference variability, and

- selecting a modulation and coding scheme in response to the provided channel quality-margin and an actual channel quality of the data channel.

In an embodiment of the method according to the present invention, the channel quality is service specific.

In an embodiment of the method according to the present invention, the channel quality is indicated by a channel quality parameter.

The channel quality parameter is in one embodiment formed by a Signal Noise Ratio SNR.

The channel quality parameter is formed in a further embodiment by a Signal to Interference Noise Ratio SINR.

The channel quality is formed in a further embodiment of the method according to the present invention by a Carrier to Interference Ratio CIR or by a Bit Error Rate BER.

In an embodiment of the method according to the present invention, the data channel is formed by a shared data channel.

In an embodiment of the method according to the present invention, the wireless link is formed by a downlink DL from a base station to a mobile station.

In an embodiment of the method according to the present invention, the wireless link is formed by an uplink UL from a mobile station to a base station.

In an embodiment of the method according to the present invention, the channel variability is indicated by a correlation coefficient.

In an embodiment of the method according to the present invention, the correlation coefficient is calculated depending on a variance and a covariance of a channel quality parameter cqp:

$$\rho = \frac{\text{Cov}[\,(\text{cqp}(t),\,\text{cqp}(t + \Delta t)\,]}{\text{Var}(\text{cqp})},$$

wherein $\Delta t$ is a time interval for which a modulation and coding scheme MCS is selected.

In an embodiment of the method according to the present invention, the service specific channel quality margin cqm is given by:

$$\text{cqm} = (1-\rho) \cdot C$$

wherein C is a service specific constant.

In an embodiment of the method according to the present invention, modulation and coding scheme-level is selected as following:

$$\text{MCS-level} = \text{MCS }(\text{cqp-cqm}),$$

wherein

cqp is the channel quality parameter,
cqm is the service specific channel quality margin and
MCS is the configurable modulation coding scheme.

In an embodiment of the method according to the present invention, the service data is transmitted via said wireless link during performing a user service.

In an embodiment of the method according to the present invention, the user service comprises video over IP service, a video data stream service, a multimedia broadcast service, a multimedia multicast service, a multimedia unicast service, a web browsing service or a file transfer service.

The invention further provides a system for adaptation of a modulation and coding scheme for data transmission of service data via a data channel of a wireless link between a base station and a mobile station comprising

- means for measuring a channel variability of the data channel and/or an interference variability,

- means for providing a channel quality margin depending on the measured channel variability and/or the measured interference variability, and

- means for selecting a modulation and coding scheme in response to the provided channel quality-margin and an actual channel quality of the data channel.

In an embodiment of the system according to the present invention, the system is a LTE (Long Term Evolution)-system.

In an embodiment of the system according to the present invention, the system is a 3GPP-system.

In an embodiment of the system according to the present invention, the data channel is a multicarrier data transmission channel.

The invention further provides a base station having an adapted modulation and coding scheme for data exchange of service data via a data channel of a wireless link with at least one mobile station, wherein the base station comprises

- a transceiver for measuring a channel variability of the data channel and/or interference variability,

- a memory which stores a look up table providing for each service a channel quality-margin depending on the measure channel variability and/or the measure interference variability, and

- a selection unit for selecting a modulation and coding scheme in response to the provided channel quality margin and an actual channel quality of the data channel.

The invention further provides a mobile station having an adaptive modulation and coding scheme for data exchange of service data via a data channel of a wireless link with a base station, wherein the mobile station comprises

- a transceiver for measuring a channel variability of the data channel and/or an interference variability,

- a memory which stores a look up table providing for each service a channel quality-margin depending on the measured quality variability and/or the measured interference variability, and

- a selection unit for selecting a modulation and coding scheme in response to the provided channel quality-margin and an actual channel quality of the data channel.

In the following, preferred embodiments of the method and system according to the present invention are described with reference to the enclosed figures.

Figure 1 shows a diagram illustrating a possible mapping of a channel quality parameter and a modulation and coding scheme MCS as employed by a conventional state of the art system.

Figure 2 shows a signal diagram illustrating an interference of a received downlink data burst for illustrating the problem underlying the present invention.

Figure 3 shows a flow chart of a possible embodiment of the method for adaptation of a modulation and coding scheme MCS according to the present invention.

Figure 4 shows a diagram for illustrating mapping of a channel quality parameter to a modulation and coding scheme MCS which is employed in an embodiment of the method according to the present invention.

Figure 5 shows a block diagram illustrating a possible embodiment of the system for adaptation of a modulation and coding scheme MCS according to the present invention.

Figure 6 shows a block diagram illustrating embodiments of a mobile station and a base station employing an adapted modulation and coding scheme for data exchange of service data according to the present invention.

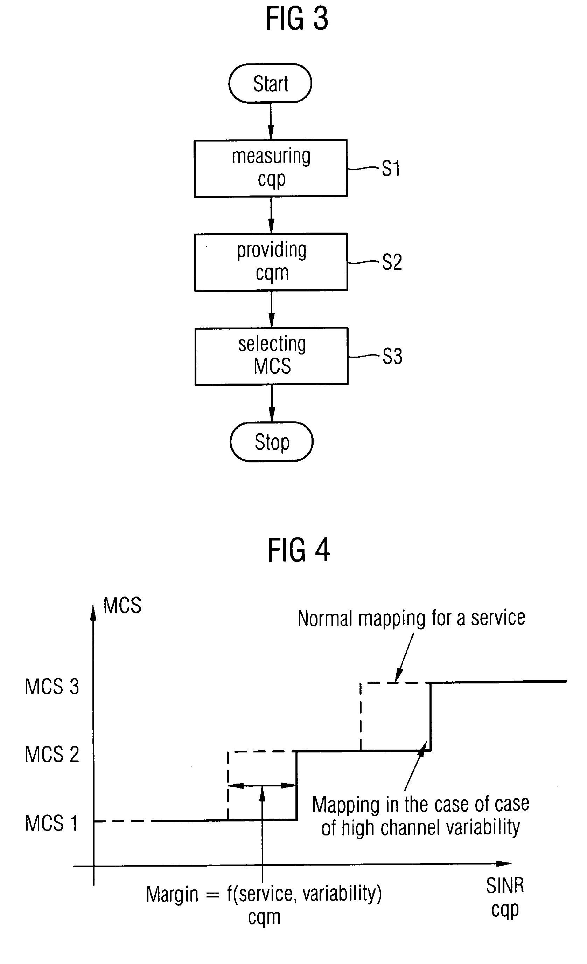

As can be seen from figure 3, in one embodiment of the method for adaptation of a modulation and coding scheme MCS for data transmission of service data via a data channel of a wireless link the method comprises three steps S1, S2, S3.

In a first step S1, the channel variability of the data channel and/or an interference variability is measured.

In a further step S2, the service specific channel quality margin (cqm) is provided depending on the measured channel variability and depending on the measured interference variability.

In a further step S3, the modulation and coding scheme MCS is selected in response to the provided channel quality margin cqm and an actual channel quality of the data channel.

The method according to the present invention takes into account the channel variability and quality of service requirements QoS of the provided service by selecting an appropriate modulation and coding MCS for a given channel quality parameter cqp, such as the signal to interference noise ratio SINR.

With the method according to the present invention, an adaptive channel quality margin cqm calculation for the selection of a modulation and coding scheme MCS is performed depending on the measured channel variability and/or the measured interference variability. In one embodiment, the channel and interference variability are measured permanently by a receiver provided in the base station BS or in the mobile station MS. From the measured channel interference variability and a service specific policy, the channel quality margin cqm is computed adaptively. In case of a higher channel variability and a real-time service, the lower MCS-level, e. g. a correlation coding scheme MCS with higher redundancy is selected for a given channel quality of the data channel. Accordingly, the method takes into account a risk for a failed data transmission due to the channel variability in order to provide a sufficient quality of service QoS for a respective data transmission service.

In a similar way, a delay insensitive service, such as a non-real-time service (NRT) can take the risk of failure so that the transceiver can send data at a higher modulation and coding scheme level, i. e. with lower redundancy, when the channel variability is high. In this case, a possible data loss can be compensated by higher data rates achieved by successful transmission using higher modulation coding schemes MCS.

The quality of the data transmission channel is indicated by a channel quality parameter cqp. The channel quality parameter cqp can be either a signal noise ratio SNR, a signal to interference noise ration SINR, a carrier to interference ration CIR or any useful channel quality parameter indicating the quality of the data transmission channel.

The data transmission channel can be formed by a shared data channel. The channel variability is indicated in one embodiment of the method according to the present invention by a correlation coefficient ρ.

Figure 4 illustrates the mapping of a modulation and coding scheme MCS and a channel quality parameter cqp, such as the signal to interference noise ratio SINR. The signal to interference noise ratio SINR indicates an inter-cell interference.

The service specific channel quality margin cqm is calculated in a possible embodiment by:

$$\mathrm{cqm} = (1-\rho) \cdot C,$$

wherein
C is a service specific constant.

In a possible embodiment, the correlation coefficient $\ell$ is calculated depending on a variance and a covariance of a channel quality parameter cqp:

$$\rho = \frac{\mathrm{Cov}[(\mathrm{cqp}(t), \mathrm{cqp}(t + \Delta t)]}{\mathrm{Var}(\mathrm{cqp})},$$

wherein
$\Delta$ t is a time interval to which a modulation and coding scheme CMS is selected.

The modulation and coding scheme MCS is selected as illustrated in figure 4 depending on the channel quality parameter cqp and depending on the calculated service specific channel quality margin cqm:

$$\mathrm{MCS\text{-}level} = \mathrm{MCS}(\mathrm{cqp}-\mathrm{cqm}).$$

Figure 4 shows a mapping in case of a high channel variability in comparison to the normal mapping for a service. The mapping as employed by the method according to the present invention takes into account the type of the data transmission service and the channel variability. The service may comprise a video over IP service, a video data stream service, a multimedia broadcast service, a multimedia multicast service, a multimedia unicast service, a web browsing service or a file transfer service.

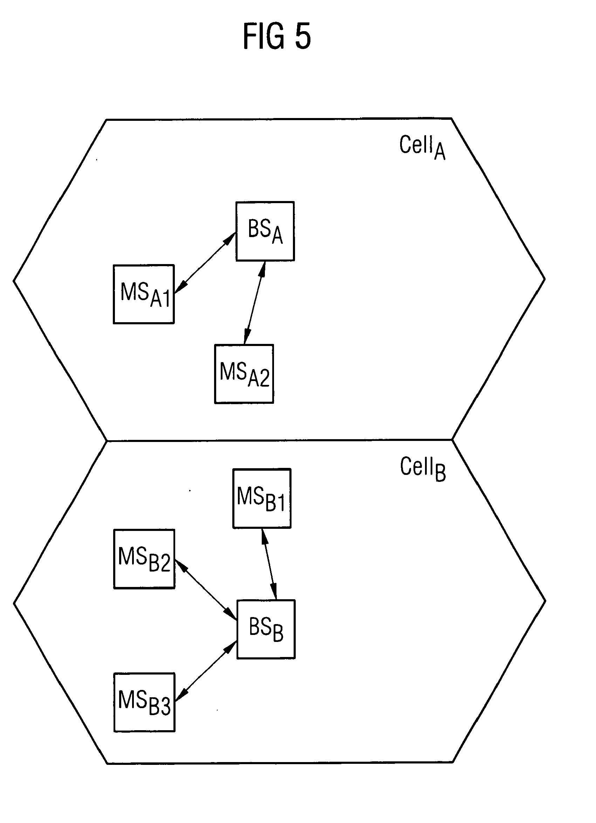

Figure 5 shows two cells, i. e. CELL-A and CELL-B of a cellular network, wherein each cell comprises a base station BS and several mobile stations MS. The shown system is, for instance, a multicarrier system using OFDM data transmission. Each mobile station has allocated several subcarriers SC in a frequency interval. Occasionally, it can happen that a mobile station, such as a mobile station MS-B1 close to another cell (CELL-A) disturbs the data transmission of another mobile station MS, such as mobile station MSA-2 and when mobile station MS have the same allocated subcarriers SC in the multicarrier data transmission system. In such a scenario, the base station BS-A of cell A receives data signals not only from the mobile station MS-A2 but also from the mobile station MS-B1 of the other cell B.

With the method according to the present invention the channel variability and an interference variability is measured. Accordingly, when an inter-cell interference occurs, a fitting modulation and coding scheme MCS is selected.

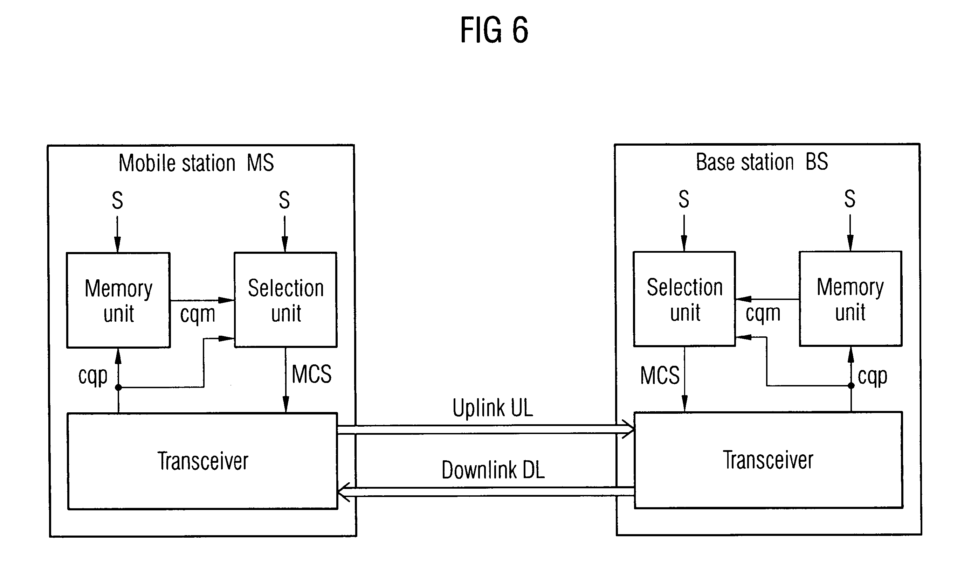

Figure 6 shows a block diagram of a mobile station MS and a base station both implementing a method for adaptation of a modulation and coding scheme for data transmission according to the present invention.

As can be seen from figure 6, the mobile station MS comprises a transceiver for measuring the channel variability of the data channel and for measuring the interference variability. A memory is provided for storing a look-up table providing for each service S a service specific channel quality margin cqm depending on the measured quality variability and depending on the measured interference variability.

Furthermore, the mobile station MS has a selection unit for selecting a modulation and coding scheme MCS in response to the provided channel quality margin cqm and an actual channel quality of the data channel.

The base station BS comprises in a possible embodiment also a transceiver for measuring the channel variability and the interference variability of the data channel as well as a memory storing a look-up table. Like the mobile station MS, the base station BS also includes a selection unit for selecting a modulation and coding scheme MCS in response to the channel quality margin cqm and an actual channel quality of the data channel.

The method and system according to the present invention provides higher data rates and offers a better usage of network resources for different loads and interference situations. Furthermore, the method and system according to the present invention has a low signalization and coordination overhead due to the fully distributed calculation algorithms.

**Claims**

1.  A method for adaptation of a modulation and coding scheme (MCS) for data transmission of service data via a data channel of a wireless link comprising the steps of:

    (a) Measuring (S1) a channel variability of the data channel and/or an interference variability;
    (b) Providing (S2) a channel quality-margin (cqm) depending on the measured channel variability and/or the measured interference variability; and
    (c) Selecting (S3) a modulation and coding scheme (MCS) in response to the provided channel quality-margin (cqm) and an actual channel quality of the data channel.

2.  The method according to claim 1,
    wherein the channel quality is service specific.

3.  The method according to claim 1,
    wherein the channel quality is indicated by a channel quality parameter (cqp).

4.  The method according to claim 3,
    wherein the channel quality parameter is a Signal Noise Ratio (SNR).

5.  The method according to claim 3,
    wherein the channel quality parameter is a Signal to Interference Noise Ratio (SINR).

6.  The method according to claim 3,
    wherein the channel quality parameter is a Carrier to Interference Ratio (CIR).

7.  The method according to claim 3,
    wherein the channel quality parameter is a Bit Error Rate (BER).

8.  The method according to claim 1,
    wherein the data channel is formed by a shared data channel.

9.  The method according to claim 1,
    wherein the wireless link is formed by a downlink (DL) from a base station (BS) to a mobile station (MS).

10. The method according to claim 1,
    wherein the wireless link is formed by an uplink (ULL) from a mobile station (MS) to a base station (BS).

11. The method according to claim 1,
    wherein the channel variability is indicated by a correlation coefficient ρ.

12. The method according to claim 11,
    wherein the correlation coefficient ρ is calculated depending on a variance and a covariance of a channel quality parameter (cqp):

$$\rho = \frac{\mathrm{Cov}[(cqp(t), cqp(t + \Delta t)]}{\mathrm{Var}(cqp)}$$

wherein $\Delta t$ is a time interval for which a modulation and coding scheme (MCS) is selected.

**13.** The method according to claim 12,
wherein the service specific channel quality margin (cqm) is given by:

$$cqm = (1-\rho) \cdot C$$

wherein C is a service specific constant.

**14.** The method according to claim 13,
wherein a modulation and coding scheme (MCS)-level is selected as following:

$$MCS\text{-}level = MCS\ (cqp\text{-}cqm),$$

wherein

cqp is the channel quality parameter.
cqm is the service specific channel quality margin and
MCS is the configurable modulation coding scheme.

**15.** The method according to claim 1,
wherein the service data is transmitted via said wireless link during performing a user service.

**16.** The method according to claim 15,
wherein the user service comprises a video over IP service, a video data stream service, a multimedia broadcast service, a multimedia multicast service, a multimedia unicast service, a web browsing service or a file transfer service.

**17.** A system for adaptation of a modulation and coding scheme (MCS) for data transmission of service data via a data channel of a wireless link between a base station and a mobile station comprising:

(a) means for measuring a channel variability of the data channel and/or an interference variability;
(b) means for providing a channel quality margin (cqm) depending on the measured channel variability and/or the measured interference variability; and
(c) means for selecting a modulation and coding scheme (MCS) in response to the provided channel quality-margin (cqm) and an actual channel quality of the data channel.

**18.** A system according to claim 17,
wherein the system is a LTE (long term evolution) -system.

**19.** A system according to claim 17,
wherein the system is a 3GPP-system.

**20.** A system according to claim 17,
wherein the data channel is a multicarrier data transmission channel.

**21.** A base station (BS) having an adapted modulation and coding scheme (MCS) for data exchange of service data via a data channel of a wireless link with at least one mobile station, wherein the base station comprises:

(a) a transceiver for measuring a channel variability of the data channel and/or interference variability;
(b) a memory storing a look up table providing for each service a channel quality-margin (cqm) depending on the measure channel variability and/or the measure interference variability; and
(c) a selection unit for selecting a modulation and coding scheme (MCS) in response to the provided channel quality margin (cqm) and an actual channel quality of the data channel.

**22.** A mobile station (MS) having an adaptive modulation and coding scheme (MCS) for data exchange of service data via a data channel of a wireless link with a base station (BS),
wherein the mobile station (MS) comprises:

(a) a transceiver for measuring a channel variability of the data channel and/or an interference variability;
(b) a memory storing a look up table providing for each service a channel quality-margin (cqm) depending on the measured quality variability and/or the measured interference variability; and
(c) a selection unit for selecting a modulation and coding scheme (MCS) in response to the provided channel quality-margin (cqm) and an actual channel quality of the data channel.

# FIG 1
## State of the art

# FIG 2
## State of the art

linter_Downlink_fi04MS1.sct.spw

# FIG 3

Start

measuring
cqp — S1

providing
cqm — S2

selecting
MCS — S3

Stop

# FIG 4

MCS

Normal mapping for a service

MCS 3

MCS 2

MCS 1

Mapping in the case of case
of high channel variability

Margin = f(service, variability)
cqm

SINR
cqp

# FIG 5

# FIG 6

Mobile station  MS

S          S

Memory unit → cqm → Selection unit

cqp

MCS

Transceiver

Uplink UL

Downlink DL

Base station  BS

S          S

Selection unit ← cqm ← Memory unit

cqp

MCS

Transceiver

EP 1 973 253 A1

**European Patent Office**

**EUROPEAN SEARCH REPORT**

Application Number

EP 07 00 5812

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/114858 A1 (WALTON JAY R [US] ET AL) 1 June 2006 (2006-06-01)<br><br>* page 2, left-hand column, paragraph 21 *<br>* page 3, right-hand column, paragraph 37 *<br><br>* page 5, left-hand column, paragraph 52 - right-hand column, paragraph 63 *<br>* page 6, left-hand column, paragraph 68 - right-hand column, paragraph 81 *<br>* page 7, left-hand column, paragraph 82 *<br>* page 7, left-hand column, paragraph 87 - paragraph 90 *<br>* page 7, right-hand column, paragraph 95 - paragraph 97; tables 3,4 *<br>----- | 1-11, 15-17, 19-22 | INV.<br>H04L1/00 |
| X | EP 1 675 294 A (FUJITSU LTD [JP]) 28 June 2006 (2006-06-28)<br><br>* page 6, line 46 - page 7, line 11 *<br>* page 8, line 16 - line 54 *<br>----- | 1-11, 15-17, 19-22 | |
| X | US 2004/184398 A1 (WALTON JAY ROD [US] ET AL) 23 September 2004 (2004-09-23)<br><br>* page 1, right-hand column, paragraph 12 - page 2, paragraph 13 *<br>* page 3, right-hand column, paragraph 43 *<br><br>* page 4, left-hand column, paragraph 54 - page 4, right-hand column, paragraph 62 *<br>* page 5, right-hand column, paragraph 71 - page 6, left-hand column, paragraph 79 *<br>* page 7, right-hand column, paragraph 107 - paragraph 112 *<br>* page 9, left-hand column, paragraph 129 *<br><br>----- <br>-/-- | 1-10, 15-17, 19-22 | TECHNICAL FIELDS SEARCHED (IPC)<br><br>H04L |

The present search report has been drawn up for all claims

| Place of search | Date of completion of the search | Examiner |
|---|---|---|
| The Hague | 28 June 2007 | Papantoniou, Antonis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

**European Patent Office**

**EUROPEAN SEARCH REPORT**

Application Number

EP 07 00 5812

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/116704 A (QUALCOMM INC [US]; KIM BYOUNG-HOON [US]; MALLADI DURGA PRASAD [US]; SA) 2 November 2006 (2006-11-02)<br>* page 7, paragraph 36 *<br>* page 8, paragraph 38 - paragraph 41 *<br>* page 16, paragraph 72 - page 17, paragraph 74; table 1 * | 1-10, 15-17, 19-22 | |

TECHNICAL FIELDS
SEARCHED      (IPC)

The present search report has been drawn up for all claims

| Place of search | Date of completion of the search | Examiner |
|---|---|---|
| The Hague | 28 June 2007 | Papantoniou, Antonis |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

EP 1 973 253 A1

## ANNEX TO THE EUROPEAN SEARCH REPORT
## ON EUROPEAN PATENT APPLICATION NO.

EP 07 00 5812

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2007

| Patent document cited in search report | | Publication date | Patent family member(s) | | Publication date |
|---|---|---|---|---|---|
| US 2006114858 | A1 | 01-06-2006 | NONE | | |
| EP 1675294 | A | 28-06-2006 | JP 2006203843 A | | 03-08-2006 |
| | | | US 2006140313 A1 | | 29-06-2006 |
| US 2004184398 | A1 | 23-09-2004 | AU 2004223374 A1 | | 07-10-2004 |
| | | | BR PI0408497 A | | 09-05-2006 |
| | | | CA 2519631 A1 | | 07-10-2004 |
| | | | CN 1781275 A | | 31-05-2006 |
| | | | EP 1604479 A2 | | 14-12-2005 |
| | | | JP 2006521068 T | | 14-09-2006 |
| | | | KR 20050118198 A | | 15-12-2005 |
| | | | MX PA05009957 A | | 14-12-2005 |
| | | | WO 2004086712 A2 | | 07-10-2004 |
| WO 2006116704 | A | 02-11-2006 | US 2006255989 A1 | | 16-11-2006 |

EPO FORM P0459

For more details about this annex : see Official Journal of the European Patent Office, No. 12/82

15